# EUROPÄISCHE PATENTSCHRIFT

(11) **EP 2 414 125 B1**
(45) Veröffentlichungstag und Bekanntmachung des Hinweises auf die Patenterteilung: **08.07.2015**
(21) Anmeldenummer: 10709513.5
(22) Anmeldetag: 18.03.2010
(51) Int. Cl.: B23K 1/00, B23K 1/19, B23K 35/00, B23K 35/02, B23K 35/30, F01D 5/00

(54) **DOPPELLOTELEMENT UMFASSEND EINE ERSTE SCHICHT AUS EINEM NI-BASIERTEN LOT SOWIE EINE ZWEITE SCHICHT MIT AKTIVEM ELEMENT, VERFAHREN ZU DESSEN HERSTELLUNG UND VERWENDUNGEN DESSELBEN ; GASTURBINENKOMPONENTE**
DUAL BRAZING ALLOY ELEMENT CONSISTING IN ONE FIRST LAYER OF AN NI-BASED BRAZING ALLOY AND ONE SECOND LAYER WITH ACTIVE ELEMENT, PROCESS FOR PRODUCING SAID ELEMENT AND USES THEREOF ; GAS TURBINE COMPONENT
ELÉMENT DE BRASAGE DOUBLE CONSISTANT EN UNE PREMIÈRE COUCHE CONSTITUÉE D'UN MATÉRIAU D'APPORT DE BRASAGE À BASE DE NI, ET EN UNE DEUXIÈME COUCHE PRÉSENTANT UN ÉLÉMENT ACTIF, PROCÉDÉ POUR SA FABRICATION ET UTILISATIONS DUDIT ÉLÉMENT ; COMPOSANT DE TURBINE A GAZ

(30) Priorität: 31.03.2009 CH 528092009
(43) Veröffentlichungstag der Anmeldung: 08.02.2012
(73) Patentinhaber: ALSTOM Technology Ltd, 5400 Baden (CH)
(72) Erfinder: BOSSMANN, Hans-Peter, 79787 Lauchringen (DE); SCHNELL, Alexander, CH-5400 Baden (CH)
(74) Vertreter: Alstom Technology Ltd
(86) Internationale Anmeldenummer: PCT/EP2010/053498
(87) Internationale Veröffentlichungsnummer: WO 2010/112342

(56) Entgegenhaltungen:
- EP-A- 1 642 667
- US-A- 4 624 404
- US-A- 5 372 298
- US-A1- 2005 166 397
- DATABASE WPI Week 200250 Thomson Scientific, London, GB; AN 2002-466200 XP002536241 -& JP 2002 089201 A (MITSUBISHI JUKOGYO KK) 27. März 2002 (2002-03-27)

## Beschreibung

Die vorliegende Erfindung betrifft ein Doppellotelement gemäß dem Oberbegriff des Anspruchs 1 (siehe, z.B., US 4 624 404 A), ein Verfahren zur Herstellung eines solchen Doppellotelements (siehe Anspruch 11) und Verwendungen sowie ein Verfahren zur Herstellung einer stoffschlüssigen Verbindung zwischen zwei Elementen aus unterschiedlichen Materialien insbesondere zwischen einem keramischen Material und einem metallischen Material unter Verwendung eines solchen Doppellotelements (siehe Anspruch 13), und eine Gasturbinenkomponente gemäß dem Oberbegriff des Anspruchs 14 (siehe, z.B., US 2005/166397 A1). STAND DER TECHNIK

Hartlöten wird zur stoffschlüssigen Verbindung von Elementen, und dabei u.a. auch zur Verbindung von keramischen mit metallischen Elementen eingesetzt. Problematisch im Zusammenhang mit solchen Verbindungen, insbesondere im Bereich von Gasturbinenanwendungen, ist das schlechte Benetzungsyerhalten gängiger Hartlote auf keramischen Oberflächen, wie sie in den heissen Verbrennungsgasen von Turbinen ausgesetzten Bereichen eingesetzt werden.

Eine mögliche Lösung der daraus resultierenden Problematik eines schlechten Stoffschlusses nach dem Lötprozess besteht darin, die keramische Oberfläche vor dem Hartlöten zu metallisieren. Dies ist aber mit grossen technischen und ökonomischen Nachteilen verbunden.

Eine weitere Möglichkeit besteht darin, sogenannte Aktivlote zu verwenden. Aktivlote werden häufig zur Verbindung von keramischen mit metallischen Bauelementen benutzt. Sie zeichnen sich durch einen gewissen Gehalt an Elementen hoher Sauerstoffaffinität aus, wodurch erst die Voraussetzungen für die Benetzbarkeit der Oberfläche des Keramikkörpers geschaffen werden. Die Legierungen, die dabei Anwendung finden, enthalten als aktive Elemente üblicherweise z.B. Ti, Hf, Zr, und/oder V. Der Begriff "aktiv" bedeutet in diesem Zusammenhang also, dass diese Elemente während des Lötprozesses mit der keramischen Oberfläche unter Ausbildung einer Reaktionsschicht reagieren (z.B. Ti bildet eine Schicht aus TiO₂), wobei diese Reaktionsschicht zwischen dem keramischen Element und dem geschmolzenen Hartlot angeordnet ist. Diese Reaktionsschicht wirkt als verbindendes Element zwischen Keramik und Lot.

Solche kommerziellen Lote sind typischerweise auf der Basis von Ag, Au, Cu, Ni respektive einer Mischung der Systeme aus Au/Ni und Ag/Cu, wobei V oder Ti normalerweise in verhältnismässig niedrigen Mengen als aktives Element zugefügt ist. Diese Materialien werden im allgemeinen als Folien, Pasten oder in Pulverform auf die keramische Lötstelle aufgebracht.

Problematisch an solchen Lot-Systemen ist deren inhärent niedriger Schmelzpunkt Tₘₚ, was die Anwendungsmöglichkeiten im Hochtemperaturbereich, d.h. beispielsweise bei Gasturbinenanwendungen, stark einschränkt. Die Schmelzpunkte der oben genannten Lote sind typischerweise im Bereich von Tₘₚ = 780-960°C für die Ag/Cu-Lote und Tₘₚ = 950-1050°C für die Au/Ni-Lote. Bei solchen Anwendungen können die Betriebstemperaturen in den Bereich der Schmelzpunkte oder sogar darüber kommen und damit die Lötstelle nachteilig beeinflussen. Für Gasturbinenanwendungen muss eine Lotverbindung diese hohen Betriebstemperaturen langfristig aushalten und immer eine genügende mechanische (stoffschlüssige) Verbindung gewährleisten, was bei diesen Loten häufig nicht der Fall ist. Die Cu- und Ni-haltigen Lote sind im Verbrennungsgas nicht langfristig beständig gegen Oxidation oder Korrosion verursacht durch z.B. O₂, H₂O und SO₂ Bestandteile des Verbrennungsgases. Es ist in diesem Zusammenhang bekannt, Aktivlote als Draht- und Folienmaterial in Form von Verbundwerkstoffen z.B. als eutektischer Ag/Cu-Kern mit Ti-Mantel oder aufeinander gelegtes Halbzeug je aus Ag resp. Zr zu benutzen. Weiterhin ist es aus der EP 0 038 584 A1 bekannt solche Materialien beidseitig auf einen Lotstreifen in Form eines flächenförmigen Metallträgers (Bandes) aus Cu oder aus einer Kupferlegierung aufzubringen.

Es existiert noch eine andere Gruppe von Aktivloten, namentlich solche, die auf verschiedenen Systemen wie Pt-Cu-Ti (Tₘₚ = 1080-1770°C) und Pd-Ni-Ti (Tₘₚ = 1080-1550°C), basieren. Nachteilig an diesen Systemen ins nun aber deren sehr hoher Schmelzpunkt, was Probleme mit dem metallischen zu verbindenden Element nach sich zieht.

Eine hohe Temperatur beim Löten zieht nämlich unerwünschte Veränderungen der Mikrostruktur von insbesondere Superlegierungen (wie sie für Bauteile in Gasturbinenanlagen eingesetzt werden) nach sich. Diese Veränderungen der Mikrostruktur führten häufig zu mechanischen Schwächungen und Ermüdung. Zudem sind solche Lote generell weniger kompatibel mit den üblichen Ni und/oder Co basierten Superlegierungen der metallischen Bauteile als dies gängige Ni-basierte Lotlegierungen sind. Dies führt z.B. mit dem Aluminium der Superlegierung zur Bildung spröder intermetallischer Phasen in der Interdiffusionszone und damit zu einer geringeren Stärke der Verbindung und generell zu einer niedrigeren mechanischen Integrität des Hybrid-Systems aus metallischem Element, keramischem Element, und dem dazwischen liegenden Lot.

Aus der US 5,372,298 ist ein Verfahren zur Verbindung von Keramik mit Keramik, keramik mit Metall oder Metall mit Metall bekannt. Dabei wird als Verbindungsmaterial ein Schichtaufbau beschrieben, welcher eine zentrale Schicht aus einem Refraktärmetall aufweist, deren Zusammensetzung auf verschiedenen Metallen beruhen kann, beispielsweise Nickel. Diese Schicht kann zusätzlich, wenn sie auf Nickel basiert, Bor enthalten. Zudem gibt es zwei ausserhalb liegende Schichten, welche anschliessend mit der Keramik respektive dem Metall in Kontakt kommen, diese Schichten können aus Gold oder Kupfer bestehen, wobei diesen Schichten in einem Bereich von 1-20 % weitere Elemente beigemischt sein können.

Aus der US 2005/0166397 aus einem völlig anderen Gebiet, namentlich der Wiederherstellung von Gästurbinenbauteilen, ist bekannt, dass es möglich ist, grossflächige Fehlstellen oberflächlich mit einem preform zu ergänzen und mit dem Bauteil zu verbinden. Der einseitig auf dem Bauteil aufgebrachte preform weist dabei zwei Schichten auf, eine erste Schicht mit einer ersten metallischen Zusammensetzung, und eine zweite Schicht mit einer zweiten metallischen Zusammensetzung. Es geht in diesem Dokument aber nicht darum, durch einen solchen preform eine Verbindung zu einem anderen Bauteil oder zu einem Ergänzungselement sicherzustellen, der preform an sich ist das ergänzende Element.

### DARSTELLUNG DER ERFINDUNG

Der Erfindung liegt demnach u.a. die Aufgabe zugrunde, ein verbessertes Lot zur stoffschlüssigen Verbindung eines metallischen Elements mit einem keramischen Element zur Verfugung zu stellen, sowie Herstellungsverfahren und Verwendungen davon.

Die Lösung dieser Aufgabe wird durch ein Doppellotelement nach Anspruch 1 erreicht. Konkret betrifft die Erfindung ein Doppellotelement zur stoffschlüssigen Verbindung einer keramischen Oberfläche mit einer metallischen Oberfläche umfassend wenigstens eine erste Schicht (oder Folie) aus einem Ni-basierten Lot enthaltend wenigstens eine den .. Schmelzpunkt erniedrigende Komponente ausgewählt aus der Gruppe Si, B, Mn, Sn, Ge und mit einem Ni-Gehalt von wenigstens 50 Gew-%, sowie in davon physikalisch, das heißt räumlich getrennter Anordnung (beispielsweise ummittelbar aneinander grenzend) wenigstens eine zweite Schicht aus oder basierend auf einem Aktivlot-Material mit einem Gehalt an aktivem Element ausgewählt aus der Gruppe Ti, Hf, Zr, V, von in der Summe 1-15 Gew.-%, bevorzugt von 3 - 10 Gew-%.

Es ist nämlich ein Bedürfnis vorhanden, eine Ni-basierte Lötlegierung mit der entsprechenden guten Kompatibilität bezüglich der genannten Superlegierungen mit einem aktiven Element für die Reaktion mit der keramischen Oberfläche zur Verfügung zu stellen. Problematisch ist dabei die Tatsache, dass eine einfache Hinzufügung (im Sinne einer Beimischung) eines oder mehrerer aktiver Elemente zu einer solchen Ni-basierten Lotlegierung offenbar nicht die gewünschten Eigenschaften zeigt. Es wurde nun erkannt, dass das Problem der ungenügenden Wirksamkeit solcher vermischter Systeme darin besteht, dass das aktive Element mit anderen, den Schmelzpunkt des Lots erniedrigenden Komponenten, wie z.B. B oder Si, reagiert. Solche den Schmelzpunkt des Lots erniedrigende Komponenten sind erforderlich, um den Schmelzpunkt des Ni-basierten Lots in einen vernünftigen Bereich von typischerweise 900-1100 °C zu bringen. Problematisch ist aber dabei, dass die den Schmelzpunkt des Lots erniedrigenden Elemente, wenn sie zusammen mit den aktiven Elementen in der Legierung vorliegen, mit diesen reagieren. Während des Lötprozesses reagieren also die reaktiven aktiven Elemente mit den den Schmelzpunkt des Lots erniedrigenden Komponenten, und bilden mit diesen hochtemperaturstabile Phasen wie z.B. TiB₂, Ti-Silizide und andere. Bo reduziert sich gleichzeitig die Wirkung beider Komponenten, d.h. durch die Entfernung der aktiven Elemente reduziert sich die effektive Benetzung der keramischen Oberfläche und durch die Entfernung der den Schmelzpunkt des Lots erniedrigenden Komponenten erhöht sich der Schmelzpunkt des Lots.

Der Kern der Erfindung besteht somit u.a. darin, diese Problematik zu losen, indem die den Schmelzpunkt des Lots erniedrigenden Komponenten im Ni-basierten Lot physikalisch von den aktiven Elementen getrennt werden, dass ein gewissermassen separates respektive räumlich und/oder zeitlich teilweise öder vollständig getrenntes Aufschmelzen ohne nennenswerte negative Wechselwirkung der Komponenten untereinander ermöglicht wird. Es geht also datum, eine physikalische Trennung und damit auch durch die dabei vorliegende Beabstandung eine gewissermaßen chemische Trennung (keine Reaktion zwischen aktivem Element und den Schmelzpunkt erniedrigenden Komponenten) zur Lösung des Problems einzusetzen. Das heißt das Doppellotelement wird aufgetrennt in einen ersten Bereich (erste Schicht), in welchem ein Nickel-basiertes Lot mit den Schmelzpunkt erniedrigenden Komponenten angeordnet ist. Dieser erste Bereich ist anschließend der metallischen Oberfläche zugewandt. In einem davon getrennten zweiten Bereich (zweite Schicht) ist in einem Trägermaterial das aktive Element angeordnet, wobei diester zweite Bereich anschließend der keramischen Oberfläche zugewandt ist.

Die erste Schicht ist also normalerweise im wesentlichen oder vollständig frei von aktiven Elementen.

Es gibt also grundsätzlich zwei Ansätze, namentlich:
a) es wird das eigentliche Lot vorgelegt in Form einer Folie oder eines Blockes (erste Schicht) und davon getrennt werden die aktiven Elemente in eine separate Schicht (Folie) in Form einer Legierung eingebracht;
b) einlegieren respektive beschichten eines Trägermaterials aus dem eigentlichen Lot mit dem aktiven Element, die Beschichtung kann dabei auch ausschließlich aus dem respektive den aktiven Elementen bestehen.

Der Hauptvorteil der Trennung der aktiven Elemente von den den Schmelzpunkt erniedrigenden Elementen besteht darin, dass während des Aufheizens auf die Löttemperatur zunächst jener Teil des Aktivlots aufschmilzt, welcher das aktive Element enthält. Das aktive Element wird entsprechen zuerst freigelegt und kann die keramische Oberfläche optimal benetzen.

Dies führt sofort zur Ausbildung eines entsprechenden M-Oxid-Typs (M = Ti, Hf, Zr, V) auf der Oberfläche der Oxid-Keramik. Bei zunehmendem Aufheizen auf die endgültige maximale Löttemperatur wird anschließend das eigentliche Lot (erste Schicht) vollständig aufgeschmolzen/und reagiert mit der Metalloberfläche und den gebildeten Oxiden auf der keramischen Oberfläche.

Beim anschließenden Herunterkühlen von der Löttemperatur erstarrt die flüssige Schicht aus Lot aus, was zu einer innigen Verbindung der Schichten führt und letzten Endes zur einer kräftigen stoffschlüssigen. Verbindung zwischen der Metalloberfläche und der keramischen Oberflächen.

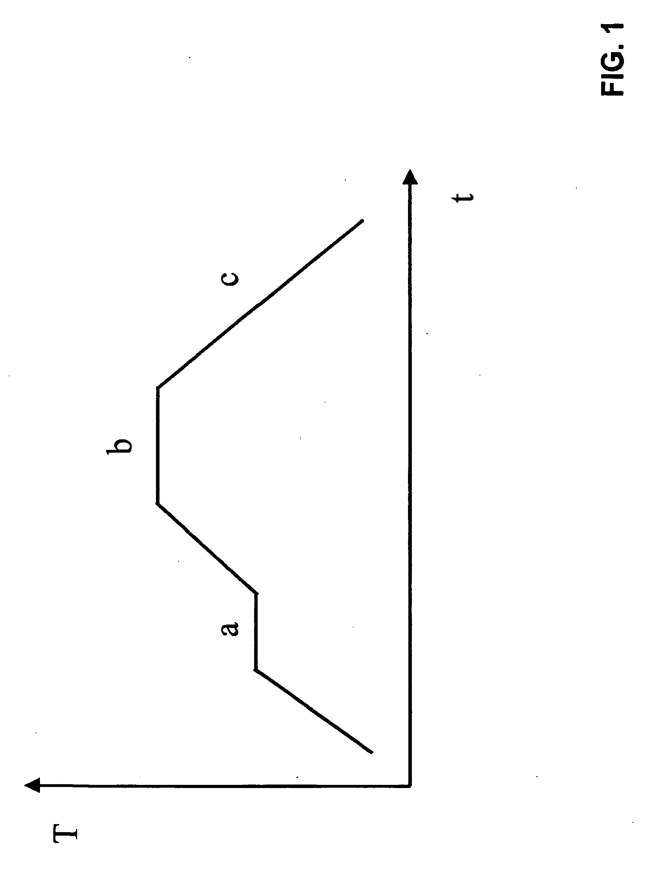

Dieses Verhalten ist schematisch in Figur 1 dargestellt, wobei unter dem mit a dargesellten Bereich jener Zeitabschnitt angegeben wird, in welchem jener Bereich des Lots schmilzt, in welchem das aktive Element angeordnet ist. (zweite Schicht) und das aktive Element auf die Oberfläche der Keramik freisetzt. Mit b ist jener Zeitabschnitt bei der eigentlichen Löttemperatur angegeben, in welchem der Rest des Lots aufschmilzt (erste Schicht). Mit c ist die Abkühlungsphase dargestellt, in welcher die Lötverbindung aushärtet und die metallische Oberfläche mit der keramischen Oberfläche verbindet.

gemäß der Erfindung ist das Doppellotelement dadurch gekennzeichnet, dass es nur die genannte erste Schicht und die genannte zweite Schicht umfasst, wobei die erste Schicht dazu ausgelegt ist, mit der metallischen Oberfläche in Kontakt zu treten und die zweite Schicht dazu ausgelegt ist, mit der keramischen Oberfläche ein Kontakt zu treten. Wesentlich ist dabei, dass die erste Schicht dazu in der Lage ist, mit der metallischen Oberfläche in Kontakt zu treten und die zweite Schicht dazu in der Lage ist, mit der keramischen Oberfläche in Kontakt zu traten.

Die erste Schicht und die zweite Schicht können dabei als individuelle Folien ausgebildet sein, welche spätestens beim Lötprozess zusammengefügt werden, wobei dann die erste Folien auf der Seite der metallischen Oberfläche und die zweite Folie auf der Seite der keramischen Oberfläche angeordnet werden und gewissermaßen die beiden Oberflächen mittelbar über diese beiden Folien verbunden werden. Die Folien können gewissermaßen als kit-of parts vorliegen, was hinsichtlich der Verarbeitungsvorteile aufweisen kann, weil die einzelnen Folien auch individuell gewissermaßen verlegt werden können, sie können aber zur Erweichung von anderen Vorteilen auch miteinander verbunden sein, so beispielsweise wenigstens punktweise (zum Beispiel durch Punktschweissen), es ist aber auch eine vollflächige Verbindung möglich.

Alternativ kann die erste Schicht als Trägerschicht ausgebildet sein und die zweite Schicht als bevorzugtermassen ausschließlich einseitige Beschichtung. Eine solche Beschichtung kann als aufgedampfte und/oder aufgesputterte Beschichtung ausgebildet sein.

Nach der Erfindung verfügt das Material der ersten Schicht über einen Schmelzpunkt im Bereich von 900-1150 °C, bevorzugtermassen über einen Schmelzpunkt in Bereich von 1050-1150 °C.

Weiterhin verfügt das Material der zweiten Schicht über einen Schmelzpunkt im Bereich von 700-1100 °C, bevorzugtermassen im Bereich von 900-1000 °C.

Ein wesentliches bevorzugtes Merkmal ist (insbesondere auch im Zusammenhang mit den oben angegebenen Bereichen der Schmelzpunkte für die erste Schicht und die zweite Schicht), dass der Schmelzpunkt der ersten Schicht höher als der der zweiten Schicht ist. Nach der Erfindung ist der Schmelzpunkt der ersten Schicht im Bereich von 30-200 K höher als der der zweiten Schicht ist, vorzugsweise im Bereich von 50-100 K höher.

Gemäß einer weiteren bevorzugten Ausführungsform hat die zweite Schicht eine Dicke im Bereich von 3-200 µm, vorzugsweise im Bereich von 20-100 µm.

Gemäß einer weiteren bevorzugten Ausführungsform hat die erste Schicht eine Dicke im Bereich von 50-1000 µm, vorzugsweise im Bereich von 300-600 µm. Hinsichtlich der stoffschlüssigen. Verbindung insbesondere im Bereich von Gasturbinen-Komponenten erweitert sich gemäß einer weiteren bevorzugten Ausführungsform als besonders vorteilhaft, wenn die zweite Schicht aus einem Ni-basierten Lot mit einem Gehalt an aktivem Element ausgewählt aus der Gruppe Ti, Hf, Zr, V von in der Summe 3-10 Gew-% besteht.

Im gleichen Zusammenhang besonders vorteilhaft, insbesondere für die Oxidations- und Korrosionsbeständigkeit im Verbrennungsgas, ist es, wenn es sich bei der ersten Schicht um ein Ni-basiertes Lot mit einem Ni-Gehalt von wenigstens 50 Gew-% handelt, welchem weitere Elemente ausgewählt aus der Gruppe Al, Cr, Ta, Co, Fe, Y und W beigemischt sind, sowie als den Schmelzpunkt erniedrigende Komponenten Mn, Sn, Ge, Si und/oder B. Des weiteren betrifft die vorliegende Erfindung ein Verfahren zur Herstellung eines solchen Aktivlot-Elements, siehe Anspruch 11. Bevorzugtermassen ist dieses Verfahren dadurch gekennzeichnet, dass auf eine Trägerfolie aus einem Ni-basierten Lot einseitig eine Beschichtung als zweite Schicht aufgebracht wird, wobei die Beschichtung vorzugsweise in einem im wesentlichen kontinuierlichen Prozess aufgedampft und/oder aufgesputtert wird.

Zudem begriff die vorliegende Erfindung spezifische Verwendungen eines solchen Elementes. Konkret betrifft sie die Verwendung eines Doppellotelements, wie es oben beschrieben wurde, zur Verbindung einer metallischen Oberfläche mit einer keramischen Oberfläche in einem Lötprozess, insbesondere zur Verbindung von Komponenten einer Gasturbine, siehe Anspruch 12.

Nicht zuletzt betrifft die vorliegende Erfindung aber auch Verfahren zur Verbindung einer Metalloberfläche mit einer keramischen Oberfläche in einem Lötprozess unter Verwendung eines solchen Doppellotelements, siehe Anspruch 13. Ein solches Verfahren ist bevorzugtermassen, dadurch gekennzeichnet, dass ein solches Doppellotelement derart zwischen die Metalloberfläche und die keramische Oberfläche eingeführt wird, dass die erste Schicht der Metalloberfläche zugewandt ist und die zweite Schicht der keramischen Oberfläche. Anschließend wird unter Zuführung von Wärmeenergie das Doppellotelement aufgeschmolzen. Dann wird unter Ausbildung einer stoffschlüssigen Verbindung zwischen Metalloberfläche und keramischer Oberfläche entweder aktiv oder passiv abgekühlt.

Eine bevorzugte Ausführungsform eines solchen Verfahrens ist dadurch gekennzeichnet, dass es sich bei der Metalloberfläche um eine hochtemperaturbeständige Superlegierung handelt, welche bevorzugtermassen Ni und/oder Co-basiert ist.

Eine weitere bevorzugte Ausführungsformen des Verfahrens ist dadurch gekennzeichnet, dass es sich bei der Keramikoberfläche um eine keramische Wärmeschutzschicht handelt, vorzugsweise um eine Aluminiumoxid-, Magnesiumoxid oder Zirkonoxid-basierte Keramik.

Ebenfalls von der Erfindung umfasst wird eine Gasturbinenkomponente gemäß dem Anspruch 14, bei welcher wenigstens bereichsweise auf der Metalloberfläche ein Keramikelement (beispielsweise Beschichtung oder Ähnliches) unter Zuhilfenahme eines Verfahrens, wie es oben beschrieben wurde, unter Zuhilfenahme eines wie oben beschriebenen Doppellotelements, befestigt ist.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung eines Temperaturprofils bei einem Lötvorgang unter Verwendung eines Aktivlots nach der Erfindung und
- Fig. 2: die Verbindung eines keramischen Elements mit einem metallischen Element bei zwei Ausführungsbeispielen, wobei in a) das erste Ausführungsbeispiel vor dem Verbinden, und in b) nach dem Verbinden dargestellt ist, und in c) das zweite Ausführungsbeispiel vor dem Verbinden, und in d) nach dem Verbinden.

### BESCHREIBUNG BEVORZUGTER AUSFÜHRUNGSFORMEN

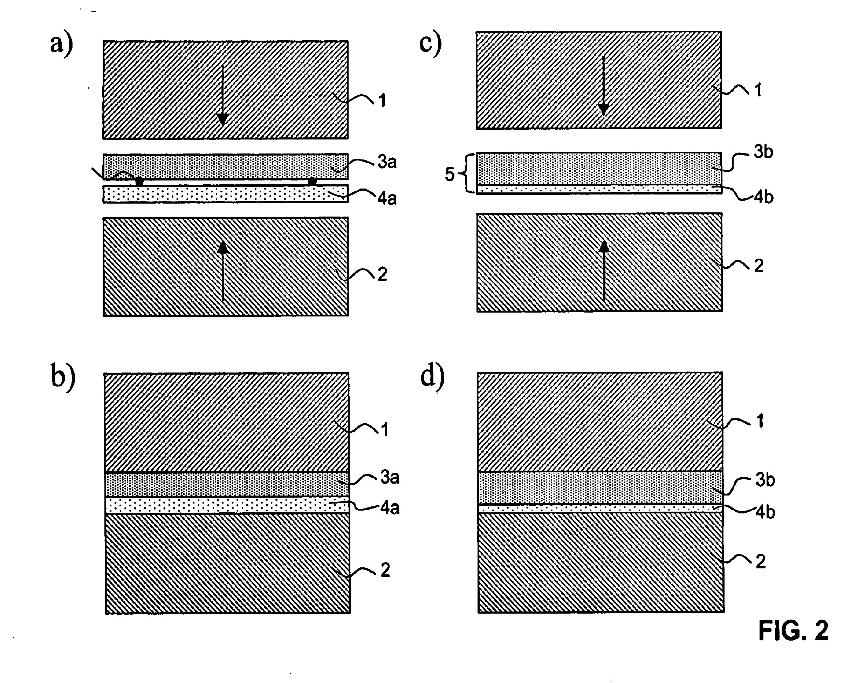

Das in diesem Dokument vorgeschlagene Doppellotelement wird dazu verwendet, wie dies durch die beiden Ausführungsbeispiele, die in Figur 2 dargestellt sind, dokumentiert werden soll, ein Metallelement 1 mit einem keramischen Element 2 zu verbinden. Dabei wird die Seite des Doppellotelementes mit dem Aktivlot und niedrigerem Schmelzpunkt der Keramik zugewandt und die andere Seite des Doppellotelementes mit dem höheren Schmelzpunkt dem Metall zugewandt.

Für die hier angestrebten Verwendungen handelt es sich bei der Metalloberfläche typischerweise um eine metallische Komponente einer Gasturbine, die hohen Temperaturen ausgesetzt ist. Solche metallische Komponenten bestehen typischerweise aus Superlegierungen die kobalt- und/oder nickelbasiert sind. Nur wenn deren Mikrostruktur optimal ausgebildet ist verfügen derartige Superlegierungen auch über die geforderten thermischen Stabilitäten. Entsprechend dürfen bei der Bearbeitung auch kritische Temperaturen nicht überschritten werden.

Bei den keramischen Elementen handelt es sich bei den hier angestrebten Verwendungen um typischerweise keramische Bauteile, z.B. eine keramische Schaufelspitze, die an z.B. ein metallisches Schaufelblatt angelötet wird.

Im Rahmen des ersten Ausführungsbeispiels, dargestellt in Figur 2 a und b, soll gezeigt werden, wie das Doppellotelement aus zwei individuellen Folien bestehen kann.

Es handelt sich dabei um eine nickelbasierte Lotfolie 3a und eine aktivierte Lotfolie 4a.

Diese Folien liegen als individuelle Folien vor und werden, wie dies in Figur 2a dargestellt ist, vor dem verbinden der beiden Elemente 1 und 2 im Spalt zwischen diesen beiden Elementen, das heisst zwischen den Oberflächen dieser Elemente angeordnet. Dabei wird so vorgegangen, dass die nickelbasierte Lotfolie 3a auf der Seite des Metallelements angeordnet ist und mit der Oberfläche des Selben in Kontakt tritt, und die Aktivlotfolie 4a auf der Seite des keramischen Elements angeordnet ist und mit der Oberfläche des keramischen Elements in Kontakt tritt.

Normalerweise sind die beiden Folien wenigstens punkt- oder streifenweise verbunden, was in der Figur schematisch über die Verbindungspunkte 6 angegeben ist.

Werden die beiden Elemente 1 und 2 gemäss Figur 2a gemäss den in der Figur angegebenen Pfeile aufeinander bewegt und anschliessend unter Einwirkung von Hitze das Lot aufgeschmolzen, so schmilzt zunächst, wie weiter oben beschrieben, die aktivierte Lotfolie 4a mit dem niedrigeren Schmelzpunkt auf und reagiert mit der Oberfläche der Keramik optimal unter Ausbildung der entsprechenden Oxide mit den Aktivelementen. Erst bei Erreichen einer noch höheren Temperatur schmilzt auch die nickelbasierte Lotfolie 3a auf und am Ende resultiert eine stoffschlüssige Verbindung, wie sie in Figur 2b dargestellt ist. Es handelt sich dabei aber um eine schematische Darstellung, typischerweise werden die beiden Schichten 3a und 4a ineinander verschmelzen und nicht notwendigerweise mehr eine derart klar getrennte Schichtstruktur mit getrennten Bereichen aufweisen.

Alternativ ist es möglich, gewissermassen die nickelbasierte Schicht als Trägerschicht 3b auszubilden, welche nur einseitig, das heisst der am Ende dem keramischen Bauteil 2 zugewandten Seite, über eine Beschichtung 4b aus Aktivlot verfügt.

Ein solches Ausführungsbeispiel ist in Figur 2c und d dargestellt.

Ein solches asymmetrisches Element wird anschliessend wie in Figur 2c derart zwischen die beiden Oberflächen eingelegt, dass die Aktivlotschicht dem Keramikbauteil zugewandt ist. Werden diese Teile anschliessend analog wie oben entlang den Pfeilen aufeinander zu bewegt und unter Einwirkung von Wärme das Lot aufgeschmolzen, so wird wiederum zunächst die Aktivlotschicht aufschmelzen, die keramische Oberfläche benetzen und die entsprechenden Oxide ausbilden, und erst bei Erreichen einer höheren Temperatur auch die nickelbasierte Lotschicht 3b aufschmelzen und anschliessend nach abkühlen eine kräftige stoffschlüssige Verbindung zwischen dem Metallelement 1 und dem keramischen Element 2 ausbilden.

Beim anderen Ansatz ist es beispielsweise möglich, nickel-basierte Materialien wie sie oben angegeben wurden und welche die den Schmelzpunkt erniedrigenden Komponenten enthalten auf der Oberfläche mit aktivem Element oder mit einer Kombination aus aktivem Element und beispielsweise Nickel zu beschichten (beispielsweise aufdampfen oder aufsputtern), was dann zu einer definierten Schicht aus aktivem Element und gegebenenfalls weiterer Komponente (beispielsweise definierte Titan-Nickelschicht) auf einer Oberfläche der nickelbasierten Lotschicht 3b führt. Diese mit aktivem Metall beschichtete Seite wird anschliessend der Keramik zugewandt, wie dies in den Figuren 2c und d dargestellt ist. Hier können dünnere Aktivelement/Nickelschichten eingesetzt werden als beim Ansatz gemäss Figur 2a resp. b, weil die entsprechende Schicht 4b keine tragende Funktion übernehmen muss. Trotzdem kann eine solche dünne Schicht die Aufgabe, die keramische Oberfläche zu benetzen, effizient wahrnehmen, und so ist es möglich, den Einsatz an aktivem Element so gering zu halten wie gerade notwendig.

### BEZUGSZEICHENLISTE

| | | | |
|---|---|---|---|
| 1 | Metallelement | 4a | Aktivlotfolie |
| 2 | keramisches Element | 4b | Aktivlotschicht |
| 3a | Nickel-basierte Lotfolie | 5 | Doppellotelement |
| 3b | Nickel-basierte Lotschicht | 6 | Verbindungsstelle |

## Patentansprüche

1. Doppellotelement (3,4,5) zur stoffschlüssigen Verbindung einer keramischen Oberfläche (2) mit einer metallischen Oberfläche (1) umfassend nur eine erste Schicht (3) und eine zweite Schicht (4), wobei die erste Schicht (3) dazu ausgelegt ist, mit der metallischen Oberfläche (1) in Kontakt zu treten und wobei die zweite Schicht (4) dazu ausgelegt ist, mit der keramischen Oberfläche (2) in Kontakt zu treten, wobei das Material der zweiten Schicht (4) einen Schmelzpunkt im Bereich von 700-1100 °C aufweist, **dadurch gekennzeichnet, dass** die erste Schicht (3) aus einem Ni-basierten Lot enthaltend wenigstens eine den Schmelzpunkt erniedrigende Komponente ausgewählt aus der Gruppe Si, B, Mn, Sn, Ge und mit einem Ni-Gehalt von wenigstens 50 Gew-% besteht, und dass die zweite Schicht (4) aus einem Aktivlot-Material mit einem Gehalt an aktivem Element ausgewählt aus der Gruppe Ti, Hf, Zr, V, von in der Summe 1- 15 Gew.-% besteht, wobei das Material der ersten Schicht (3) einen Schmelzpunkt im Bereich von 900-1150°C aufweist mit der Massgabe, dass der Schmelzpunkt der ersten Schicht (3) im Bereich von 30-200K höher ist als der Schmelzpunkt der zweiten Schicht (4).

2. Doppellotelement (3, 4, 5) nach Anspruch 1, **dadurch gekennzeichnet, dass** die erste Schicht (3) und die zweite Schicht (4) als individuelle Folien ausgebildet sind, welche spätestens beim Lötprozess zusammengefügt werden, wobei bevorzugtermassen die beiden Schichten (3, 4, 5) wenigstens punktweise miteinander verbunden sind.

3. Doppellotelement (3, 4, 5) nach Anspruch 1, **dadurch gekennzeichnet, dass** die erste Schicht (3) als Trägerschicht (3b) ausgebildet ist und die zweite Schicht (4) als bevorzugtermassen ausschließlich einseitige Beschichtung (4b), insbesondere bevorzugtermassen als aufgedampfte und/oder aufgesputterte Beschichtung ausgebildet ist.

4. Doppellotelement (3, 4, 5) nach einem der vorhergehenden Ansprüche, **dadurch gekennzeichnet, dass** das Material der ersten Schicht (3) einen Schmelzpunkt im Bereich von 1050-1150°C aufweist.

5. Doppellotelement (3, 4, 5) nach einem der vorhergehenden Ansprüche, **dadurch gekennzeichnet, dass** das Material der zweiten Schicht (4) einen Schmelzpunkt im Bereich von 900-1000 °C, aufweist

6. Doppellotelement (3, 4, 5) nach einem der vorhergehenden Ansprüche, **dadurch gekennzeichnet, dass** die zweite Schicht (4) eine Dicke im Bereich von 3-200 µm, vorzugsweise im Bereich von 20-100 µm aufweist, und/oder dass die erste Schicht (3) eine Dicke im Bereich von 50-1000 µm, vorzugsweise im Bereich von 300-600 µm aufweist.

7. Doppellotelement (3, 4, 5) nach einem der vorhergehenden Ansprüche, **dadurch gekennzeichnet, dass** die zweite Schicht (4) aus einem bevorzugt Ni-basierten Lot mit einem Gehalt an aktivem Element ausgewählt aus der Gruppe Ti, Hf, Zr, V, von in der Summe 3-10 Gew-% besteht.

8. Doppellotelement (3, 4, 5) nach einem der vorhergehenden Ansprüche, **dadurch gekennzeichnet, dass** die zweite Schicht (4) aus einem Au-, Ag- oder Pd-basierten Lot mit einem Gehalt an aktivem Element ausgewählt aus der Gruppe Ti, Hf, Zr, V, von in der Summe 1-15 Gew.-%, bevorzugt 3-10 Gew-% besteht.

9. Doppellotelement (3, 4, 5) nach einem der vorhergehenden Ansprüche, **dadurch gekennzeichnet, dass** es sich bei der ersten Schicht (3) um ein Ni-basiertes Lot mit einem Ni-Gehalt von wenigstens 50 Gew-% handelt, welchem weitere Elemente ausgewählt aus der Gruppe Al, Cr, Fe, Ta, Co, Y und W beigemischt sind, sowie als den Schmelzpunkt erniedrigende Komponente Si, Mn, Sn, Ge und/oder B.

10. Doppellotelement (3, 4, 5) nach einem der vorhergehenden Ansprüche, **dadurch gekennzeichnet, dass** es sich bei der ersten Schicht (3) um eine Trägerfolie aus einem Ni-basierten Lot mit einem Ni-Gehalt von wenigstens 50 Gew-%, welchem weitere Elemente ausgewählt aus der Gruppe Al, C, Cr, Ta, Co, Fe, Y und W beigemischt sind sowie als den Schmelzpunkt erniedrigende Komponente Si und/oder B handelt, auf welche die zweite Schicht (4) als ausschließlich einseitige Beschichtung aufgebracht ist.

11. Verfahren zur Herstellung eines Doppellotelements (3, 4, 5) nach einem der vorhergehenden Ansprüche, **dadurch gekennzeichnet, dass** auf eine Trägerfolie (3) aus einem Ni-basierten Lot einseitig eine Beschichtung als zweite Schicht (4) aufgebracht wird, wobei die Beschichtung vorzugsweise in einem im wesentlichen kontinuierlichen Prozess aufgedampft und/oder aufgesputtert wird und/oder dass Doppellotelement auf eine Trägerfolie (3) aus einem Ni-basierten Lot einseitig eine zweite Schicht (4) aufgebracht wird, wobei die Beschichtung vorzugsweise pulverförmig auf die Trägerfolien aufgebracht und anschliessend mechanisch, bevorzugt durch Rollen oder Pressen, oder thermisch, bevorzugt durch Laser, Wärmestrahlung, induktive Erwärmung, behandelt wird.

12. Verwendung eines Doppellotelements (3, 4, 5) nach einem der Ansprüche 1-10 zur Verbindung einer metallischen Oberfläche (1) mit einer keramischen Oberfläche (2) in einem Lötprozess, insbesondere zur Verbindung von Komponenten einer Gasturbine.

13. Verfahren zur Verbindung einer Metalloberfläche (1) mit einer keramischen Oberfläche (2) in einem Lötprozess, **dadurch gekennzeichnet, dass** ein Doppellotelement (3, 4, 5) nach einem der vorhergehenden Ansprüche 1-10 derart zwischen die Metalloberfläche (1) und die keramische Oberfläche (2) eingeführt wird, dass die erste Schicht (3) der Metalloberfläche (1) zugewandt ist und die zweite Schicht (4) der keramischen Oberfläche, und dass anschließend unter Zuführung von Wärmeenergie das Doppellotelement (3, 4, 5) aufgeschmolzen wird und unter Ausbildung einer stoffschlüssigen Verbindung zwischen Metalloberfläche (1) und keramische Oberfläche (2) abgekühlt wird, wobei es sich vorzugsweise bei der Metalloberfläche (1) um eine hochtemperaturbeständige Superlegierung handelt, welche bevorzugtermassen Ni-und/oder Co-basiert ist und/oder wobei es sich vorzugsweise bei der Keramikoberfläche um eine keramische Wärmeschutzschicht handelt, vorzugsweise um eine yttriumstabilisierte Zirkon-basierte (YSZ) Keramik.

14. Gasturbinenkomponente mit einem Metallelement (1), **dadurch gekennzeichnet, dass** wenigstens bereichsweise auf der Metalloberfläche (1) ein Keramikelement (2) unter Zuhilfenahme eines Verfahrens nach einem der Ansprüche 12-13 befestigt ist, wobei das Lot eine Ni-basierte Lotlegierung aus einem Ni-basierten Material, enthaltend wenigstens eine den Schmelzpunkt erniedrigende Komponente ausgewählt aus der Gruppe Si, B, Mn, Sn, Ge und ein Aktivlot-Material ausgewählt aus der Gruppe Ti, Hf, Zr und V aufweist.

## Claims

1. Dual brazing alloy element (3, 4, 5) for the materially integral connection of a ceramic surface (2) to a metallic surface (1), comprising only one first layer (3) and one second layer (4), the first layer (3) being designed to come into contact with the metallic surface (1), and the second layer (4) being designed to come into contact with the ceramic surface (2), the material of the second layer (4) having a melting point in the range of 700-1100°C, **characterized in that** the first layer (3) is composed of an Ni-based brazing alloy containing at least one component that lowers the melting point and is selected from the group Si, B, Mn, Sn, Ge and having an Ni content of at least 50% by weight, and **in that** the second layer (4) is composed of an active brazing alloy material with a content of active element selected from the group Ti, Hf, Zr, V, of, in total, 1-15% by weight, the material of the first layer (3) having a melting point in the range of 900-1150°C, with the proviso that the melting point of the first layer (3) is in the range of 30-200K higher than the melting point of the second layer (4).

2. Dual brazing alloy element (3, 4, 5) according to Claim 1, **characterized in that** the first layer (3) and the second layer (4) are designed as individual foils which are joined together at the latest during the brazing process, preferably the two layers (3, 4, 5) being connected to one another at least in spots.

3. Dual brazing alloy element (3, 4, 5) according to Claim 1, **characterized in that** the first layer (3) is designed as a carrier layer (3b) and the second layer (4) is designed as a preferably only one-sided coating (4b), in particular preferably as a vapor-deposited and/or sputtered-on coating.

4. Dual brazing alloy element (3, 4, 5) according to one of the preceding claims, **characterized in that** the material of the first layer (3) has a melting point in the range of 1050-1150°C.

5. Dual brazing alloy element (3, 4, 5) according to one of the preceding claims, **characterized in that** the material of the second layer (4) has a melting point in the range of 900-1000°C.

6. Dual brazing alloy element (3, 4, 5) according to one of the preceding claims, **characterized in that** the second layer (4) has a thickness in the range of 3-200 µm, preferably in the range of 20-100 µm, and/or **in that** the first layer (3) has a thickness in the range of 50-1000 µm, preferably in the range of 300-600 µm.

7. Dual brazing alloy element (3, 4, 5) according to one of the preceding claims, **characterized in that** the second layer (4) is composed of a preferably Ni-based brazing alloy with a content of active element selected from the group Ti, Hf, Zr, V, of, in total, 3-10% by weight.

8. Dual brazing alloy element (3, 4, 5) according to one of the preceding claims, **characterized in that** the second layer (4) is composed of an Au-, Ag- or Pd-based brazing alloy with a content of active element selected from the group Ti, Hf, zr, V, of, in total, 1-15% by weight, preferably 3-10% by weight.

9. Dual brazing alloy element (3, 4, 5) according to one of the preceding claims, **characterized in that** the first layer (3) is an Ni-based brazing alloy with an Ni content of at least 50% by weight, to which further elements selected from the group Al, Cr, Fe, Ta, Co, Y and W are admixed, and, as a component that lowers the melting point, Si, Mn, Sn, Ge and/or B.

10. Dual brazing alloy element (3, 4, 5) according to one of the preceding claims, **characterized in that** the first layer (3) is a carrier foil composed of an Ni-based brazing alloy with an Ni content of at least 50% by weight, to which further elements selected from the group Al, C, Cr, Ta, Co, Fe, Y and W are admixed, and, as a component that lowers the melting point, Si and/or B, to which layer the second layer (4) is applied as an only one-sided coating.

11. Process for producing a dual brazing alloy element (3, 4, 5) according to one of the preceding claims, **characterized in that** a coating is applied as a second layer (4) on one side to a carrier foil (3) composed of an Ni-based brazing alloy, the coating preferably being vapor-deposited and/or sputtered on in an essentially continuous process,
and/or **in that** a second layer (4) is applied on one side to a carrier foil (3) composed of an Ni-based brazing alloy, the coating preferably being applied in powder form to the carrier foils and subsequently being treated mechanically, preferably by rolling or pressing, or thermally, preferably by laser, heat radiation or inductive heating.

12. Use of a dual brazing alloy element (3, 4, 5) according to one of Claims 1-10 for connecting a metallic surface (1) to a ceramic surface (2) in a brazing process, in particular for the connection of components of a gas turbine.

13. Process for connecting a metal surface (1) to a ceramic surface (2) in a brazing process, **characterized in that** a dual brazing alloy element (3, 4, 5) according to one of the preceding Claims 1-10 is introduced between the metal surface (1) and the ceramic surface (2) in such a way that the first layer (3) faces the metal surface (1) and the second layer (4) faces the ceramic surface, and **in that**, subsequently, with heat energy being supplied, the dual brazing alloy element (3, 4, 5) is fused and is cooled so as to form a materially integral connection between the metal surface (1) and ceramic surface (2),
the metal surface (1) preferably being a high-temperature-resistant superalloy which is preferably Ni- and/or Co-based, and/or the ceramic surface preferably being a ceramic heat protection layer, preferably an yttrium-stabilized zirconium-based (YSZ) ceramic.

14. Gas turbine component having a metal element (1), **characterized in that** a ceramic element (2) is fastened, at least in regions, to the metal surface (1) with the aid of a process according to one of Claims 11-13, the brazing alloy having an Ni-based brazing alloy composed of an Ni-based material containing at least one component that lowers the melting point, said component being selected from the group Si, B, Mn, Sn, Ge, and an active brazing alloy material selected from the group Ti, Hf, Zr and V.

## Revendications

1. Élément de brasage double (3, 4, 5) pour le raccordement par liaison de matière d'une surface céramique (2) avec une surface métallique (1), comprenant uniquement une première couche (3) et une seconde couche (4), la première couche (3) étant agencée de manière à rentrer en contact avec la surface métallique (1) et la seconde couche (4) étant agencée de manière à rentrer en contact avec la surface céramique (2), le matériau de la seconde couche (4) présentant un point de fusion dans la plage allant de 700 à 1 100 °C, **caractérisé en ce que** la première couche (3) est constituée d'un matériau d'apport de brasage à base de Ni contenant au moins un composant abaissant le point de fusion choisi dans le groupe constitué par Si, B, Mn, Sn, Ge, et ayant une teneur en Ni d'au moins 50 % en poids, et **en ce que** la seconde couche (4) est constituée d'un matériau d'apport de brasage actif ayant une teneur en élément actif, choisi dans le groupe constitué par Ti, Hf, Zr, V, au total de 1 à 15 % en poids,
le matériau de la première couche (3) présentant un point de fusion dans la plage allant de 900 à 1 150 °C, à condition que le point de fusion de la première couche (3) se situe dans la plage allant de 30 à 200 K au-dessus du point de fusion de la seconde couche (4).

2. Élément de brasage double (3, 4, 5) selon la revendication 1, **caractérisé en ce que** la première couche (3) et la seconde couche (4) sont configurées sous la forme de films individuels, qui sont assemblés au plus tard lors du procédé de brasage, les deux couches (3, 4, 5) étant de préférence reliées l'une à l'autre de manière au moins ponctuelle.

3. Élément de brasage double (3, 4, 5) selon la revendication 1, **caractérisé en ce que** la première couche (3) est configurée sous la forme d'une couche support (3b) et la seconde couche (4) est configurée sous la forme d'un revêtement (4b) de préférence exclusivement unilatéral, de manière particulièrement préférée sous la forme d'un revêtement déposé sous forme vapeur et/ou pulvérisé.

4. Élément de brasage double (3, 4, 5) selon l'une quelconque des revendications précédentes, **caractérisé en ce que** le matériau de la première couche (3) présente un point de fusion dans la plage allant de 1 050 à 1 150 °C.

5. Élément de brasage double (3, 4, 5) selon l'une quelconque des revendications précédentes, **caractérisé en ce que** le matériau de la seconde couche (4) présente un point de fusion dans la plage allant de 900 à 1 000 °C.

6. Élément de brasage double (3, 4, 5) selon l'une quelconque des revendications précédentes, **caractérisé en ce que** la seconde couche (4) présente une épaisseur dans la plage allant de 3 à 200 µm, de préférence dans la plage allant de 20 à 100 µm, et/ou **en ce que** la première couche (3) présente une épaisseur dans la plage allant de 50 à 1 000 µm, de préférence dans la plage allant de 300 à 600 µm.

7. Élément de brasage double (3, 4, 5) selon l'une quelconque des revendications précédentes, **caractérisé en ce que** la seconde couche (4) est constituée d'un matériau d'apport de brasage de préférence à base de Ni, ayant une teneur en élément actif, choisi dans le groupe constitué par Ti, Hf, Zr, V, au total de 3 à 10 % en poids.

8. Élément de brasage double (3, 4, 5) selon l'une quelconque des revendications précédentes, **caractérisé en ce que** la seconde couche (4) est constituée d'un matériau d'apport de brasage à base d'Au, Ag ou Pd, ayant une teneur en élément actif, choisi dans le groupe constitué par Ti, Hf, Zr, V, au total de 1 à 15 % en poids, de préférence de 3 à 10 % en poids.

9. Élément de brasage double (3, 4, 5) selon l'une quelconque des revendications précédentes, **caractérisé en ce que** la première couche (3) consiste en un matériau d'apport de brasage à base de Ni ayant une teneur en Ni d'au moins 50 % en poids, dans lequel sont incorporés des éléments supplémentaires choisis dans le groupe constitué par Al, Cr, Fe, Ta, Co, Y et W, ainsi que des composants abaissant le point de fusion Si, Mn, Sn, Ge et/ou B.

10. Élément de brasage double (3, 4, 5) selon l'une quelconque des revendications précédentes, **caractérisé en ce que** la première couche (3) consiste en un film support constitué d'un matériau d'apport de brasage à base de Ni ayant une teneur en Ni d'au moins 50 % en poids, dans lequel sont incorporés des éléments supplémentaires choisis dans le groupe constitué par Al, C, Cr, Ta, Co, Fe, Y et W, ainsi que des composants abaissant le point de fusion Si et/ou B, sur lequel la seconde couche (4) est appliquée sous la forme d'un revêtement exclusivement unilatéral.

11. Procédé de fabrication d'un élément de brasage double (3, 4, 5) selon l'une quelconque des revendications précédentes, **caractérisé en ce qu'**un revêtement est appliqué unilatéralement en tant que seconde couche (4) sur un film support (3) constitué d'un matériau d'apport de brasage à base de Ni, le revêtement étant de préférence déposé sous forme vapeur et/ou pulvérisé par un procédé essentiellement continu, et/ou **en ce qu'**une seconde couche (4) est appliquée unilatéralement sur un film support (3) constitué d'un matériau d'apport de brasage à base de Ni, le revêtement étant de préférence appliqué sous forme de poudre sur le film support, puis traité mécaniquement, de préférence par cylindrage ou compression, ou thermiquement, de préférence par laser, rayonnement thermique, chauffage inductif.

12. Utilisation d'un élément de brasage double (3, 4, 5) selon l'une quelconque des revendications 1 à 10 pour le raccordement d'une surface métallique (1) avec une surface céramique (2) lors d'un procédé de brasage, notamment pour le raccordement de composants d'une turbine à gaz.

13. Procédé de raccordement d'une surface métallique (1) avec une surface céramique (2) lors d'un procédé de brasage, **caractérisé en ce qu'**un élément de brasage double (3, 4, 5) selon l'une quelconque des revendications 1 à 10 est introduit entre la surface métallique (1) et la surface céramique (2) de sorte que la première couche (3) soit orientée vers la surface métallique (1) et que la seconde couche (4) soit orientée vers la surface céramique, et **en ce que** l'élément de brasage double (3, 4, 5) est ensuite fondu avec apport d'énergie thermique et refroidi avec formation d'un raccordement par liaison de matière entre la surface métallique (1) et la surface céramique (2),
la surface métallique (1) consistant de préférence en un superalliage résistant aux températures élevées, qui est de préférence à base de Ni et/ou de Co, et/ou la surface métallique consistant de préférence en une couche céramique de protection thermique, de préférence en une céramique à base de zirconium stabilisée par de l'yttrium (YSZ).

14. Composant de turbine à gaz comprenant un élément métallique (1), **caractérisé en ce qu'**un élément céramique (2) est fixé au moins par zones sur la surface métallique (1) à l'aide d'un procédé selon l'une quelconque des revendications 11 à 13, le matériau d'apport de brasage comprenant un alliage d'apport brasage à base de Ni constitué d'un matériau à base de Ni contenant au moins un composant abaissant le point de fusion choisi dans le groupe constitué par Si, B, Mn, Sn, Ge, et un matériau d'apport de brasage actif choisi dans le groupe constitué par Ti, Hf, Zr et V.
